# DEMANDE DE BREVET EUROPEEN

(11) **EP 1 653 108 A1**
(43) Date de publication de la demande: **03.05.2006**
(21) Numéro de dépôt: 05300836.3
(22) Date de dépôt: 18.10.2005
(51) Int. Cl.: F16D 48/06

(54) **Dispositif de commande pour embrayage de véhicule automobile**

(30) Priorité: 29.10.2004 FR 0411567
(71) Demandeur: Renault s.a.s., 92100 Boulogne Billancourt (FR)
(72) Inventeur: Audoin, Alexandre, 94370 Sucy en Brie (FR); Guilllouzic, Yannick, Bât.B8 92380 Garches (FR); Mansanno, Thierry, 91290 La Nouvelle (FR)

(57) **Abrégé**

Ce dispositif commande l'embrayage par l'intermédiaire d'un actionneur en activant une stratégie d'ouverture anticipée de l'embrayage lorsque le régime de l'arbre primaire de la boîte de vitesses descend en dessous d'un seuil prédéterminé afin d'empêcher le calage du moteur d'entraînement du véhicule.

Selon l'invention, le dispositif de commande est agencé pour activer ladite stratégie d'ouverture anticipée également en fonction d'au moins l'un des paramètres suivants choisis parmi la température (Tₐ) dudit actionneur, la température (Tₑₘ) de l'eau de refroidissement dudit moteur et le rapport de vitesses (R) dans lequel est engagé ladite boîte.

## Description

L'invention concerne un dispositif de commande de l'embrayage d'un véhicule automobile.

Dans le cas des asservissements d'embrayages pour véhicules automobiles, il est déjà connu de prévoir des mesures empêchant, autant que faire se peut, le calage du moteur du véhicule même par exemple en cas d'un freinage très brutal.

Ainsi, il existe des groupes motopropulseurs de véhicule, que ce soit avec boîte de vitesses automatique ou avec boîte de vitesses séquentielle, dans lesquels l'embrayage est pourvu d'un dispositif de commande qui ouvre l'embrayage par anticipation (opération parfois appelée "coasting" par les spécialistes), lorsque le véhicule, en perte de vitesse, s'approche de l'arrêt pour éviter le calage du moteur avant l'arrêt. Ainsi, en phases de fonctionnement du véhicule avec rapport de vitesses établi de la boîte, le dispositif de commande active une stratégie d'ouverture par anticipation, lorsque le régime de l'arbre primaire de la boîte de vitesses passe en dessous d'un seuil prédéterminé. En d'autres termes, l'embrayage n'est alors plus complètement fermé et vient se caler sur une position qui lui permet de transmettre un couple supérieur au couple moteur calculé à chaque instant par le calculateur de bord du véhicule. Cette ouverture par anticipation permet, en cas de freinage brusque, de raccourcir le temps de réponse de l'actionneur de l'embrayage.

Cependant, un dispositif de commande d'embrayage de ce type connu, permet de ne résoudre que partiellement les problèmes de calage, car la stratégie appliquée n'évite ni les pompages de régime nuisant au confort de conduite, ni les glissements d'embrayage qui risquent de réduire la fiabilité de l'embrayage.

Ce problème se fait sentir en particulier dans les véhicules utilitaires de taille moyenne destinés à transporter par exemple des charges pouvant aller jusqu'à 2 tonnes. Le poids total du véhicule, pesant lui-même par exemple 2 tonnes, pouvant ainsi aller de 2 à 4 tonnes, des exigences sévères sont imposées à son groupe motopropulseur. En particulier, la loi de commande de l'actionneur de l'embrayage doit être établie pour qu'en toutes circonstances (quelle que soit la charge, en fonctionnement à froid ou à chaud etc.), un risque de calage du moteur soit évité. L'invention s'applique donc en particulier à ce genre de véhicules.

Pour illustrer l'arrière-plan technologique de l'invention, il est fait référence au EP 1 018 450 dans lequel on décrit un dispositif de commande des rapports de transmission d'un véhicule automobile, dispositif dans lequel on prélève une information de mesure sur l'embrayage, à savoir l'énergie dissipée dans celui-ci afin d'adapter la loi de commande de la boîte de vitesses à la pente du terrain sur lequel fonctionne le véhicule. Toutefois, ce document ne fournit aucun enseignement conduisant à la solution du problème qui est à la base de la présente invention.

L'invention a ainsi pour but de fournir un dispositif de commande pour embrayage de véhicule automobile permettant d'éviter à coup sûr les calages du moteur tout en préservant le confort de conduite.

L'invention a donc pour objet un dispositif de commande d'un embrayage pour groupe motopropulseur de véhicule automobile comportant un moteur entraînant, par l'intermédiaire dudit embrayage, une boîte de vitesses de type automatique ou séquentiel, l'embrayage étant ouvert ou fermé à l'aide d'un actionneur commandé par le dispositif de commande, ce dernier étant agencé pour activer une stratégie d'ouverture anticipée de l'embrayage lorsque le régime de l'arbre primaire de ladite boîte de vitesses descend en dessous d'un seuil prédéterminé afin d'empêcher le calage dudit moteur pendant les phases de ralentissement jusqu'à l'arrêt dudit véhicule,
ce dispositif de commande étant caractérisé en ce qu'il est agencé pour activer ladite stratégie d'ouverture anticipée de l'embrayage également en fonction d'au moins l'un des paramètres suivants choisis parmi la température dudit actionneur, la température de l'eau de refroidissement dudit moteur et le rapport de vitesses dans lequel est engagé ladite boîte.

Grâce à ces caractéristiques, il devient possible de réduire l'utilisation de la stratégie d'ouverture anticipée de l'embrayage, jusqu'au minimum strictement nécessaire pour éviter les calages intempestifs, cette utilisation étant conditionnée en particulier par le rapport instantané de la boîte de vitesses, par la température de l'actionneur d'embrayage et/ou par la température de l'eau de refroidissement du moteur.

Selon d'autres caractéristiques avantageuses de l'invention:
- le seuil d'activation de la stratégie d'ouverture anticipée de l'embrayage est fixé à une valeur du régime de primaire de la boîte de vitesses, inférieure à la valeur de seuil de passage de rapports de la boîte de vitesses, notamment lors des phases de freinage du véhicule.
- pendant l'activation de ladite stratégie d'ouverture anticipée, le fonctionnement du dispositif de commande est asservi à un ou plusieurs des paramètres suivants: le régime du moteur, le rapport engagé de la boîte de vitesses et le régime de l'arbre primaire de celle-ci.

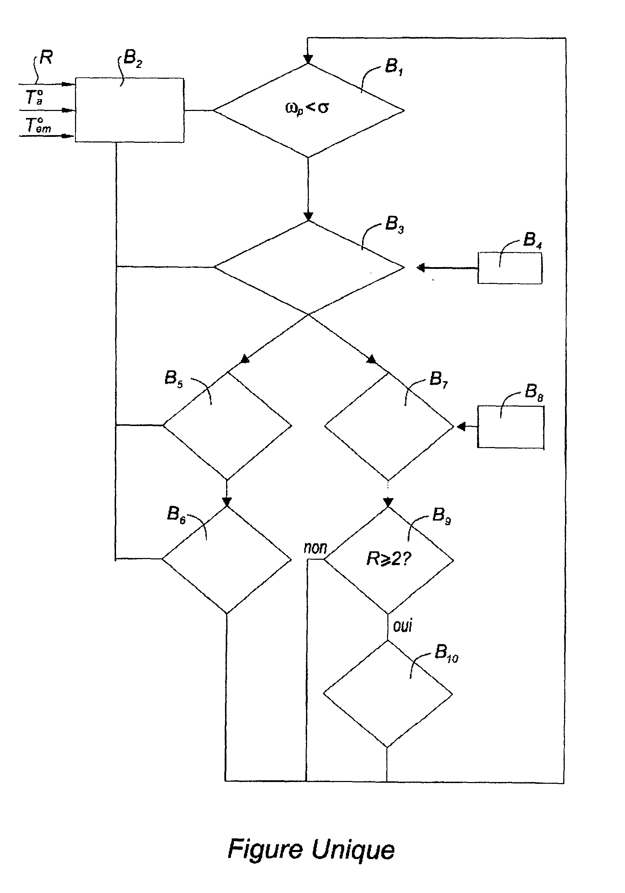

D'autres caractéristiques et avantages de l'invention apparaîtront au cours de la description qui va suivre, donnée uniquement à titre d'exemple et faite en se référant au dessin annexé sur lequel:

La figure unique représente un organigramme illustrant le fonctionnement d'un exemple de réalisation du dispositif de commande selon l'invention.

D'une manière non représentée sur la figure, l'invention s'applique à un groupe motopropulseur de véhicule automobile connu en soi dans lequel un moteur entraîne par l'intermédiaire d'un embrayage une boîte de vitesses pouvant être du type automatique ou séquentiel. L'embrayage est pourvu d'un actionneur qui permet de l'ouvrir ou de le fermer en fonction des signaux de commande qui lui sont fourni par le dispositif de commande selon l'invention. Le fonctionnement du groupe motopropulseur est régi par un calculateur de bord du véhicule, comme cela est connu en soi dans la technique. Le logiciel de ce calculateur de bord peut comprendre une partie qui est associé au dispositif de commande d'embrayage selon l'invention ou, selon une variante, le dispositif de commande peut être équipé de son propre logiciel.

En se référant désormais à la figure, on voit que pendant le fonctionnement du véhicule, le régime *ω*ₚ de l'arbre primaire de la boîte de vitesses est constamment comparé à un seuil *σ* (bloc B1) qui, selon l'invention, est variable en fonction de plusieurs paramètres. Ce seuil peut être déduit, par exemple d'une cartographie (bloc B2) dont les paramètres d'entrée sont le rapport engagé R de la boîte de vitesses, la température tₐ de l'actionneur de l'embrayage et/ou la température tₑₘ de l'eau de refroidissement du moteur du véhicule. De préférence, le seuil *σ* est fixé à une valeur du régime *ω*ₚ inférieur au seuil de passage de rapports de la boîte de vitesses, notamment lors des phases de freinage du véhicule.

Le tableau ci-dessous montre comment peuvent être fixées les valeurs du seuil d'activation de la stratégie d'ouverture anticipée en fonction des rapports R engagés de la boîte de vitesses, étant entendu que dans l'exemple, les valeurs concernent une température d'eau de refroidissement du moteur de 20°C. On a indiqué les régimes de rotation de rétrogradation *σ*ᵣ de l'arbre primaire de deux types de boîte de vitesses l'un automatique et l'autre séquentiel à six rapports.

Des tableaux semblables peuvent être dressés pour d'autres températures d'eau de refroidissement et/ou des températures différentes de l'actionneur d'embrayage. D'une manière générale, il s'avère qu'avec une température plus faible, le seuil d'activation *σ* doit être choisi à une valeur de régime plus élevée. Les valeurs du seuil sont obtenues empiriquement. La cartographie B2 représente donc de tels tableaux.

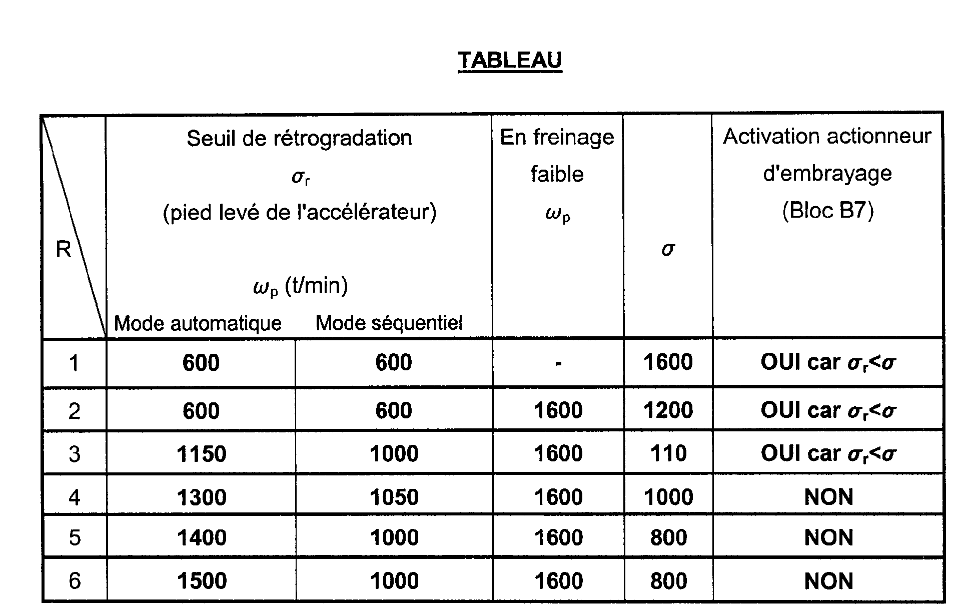

Le tableau montre également que pour les rapports 4, 5 et 6, aucune activation de stratégie d'ouverture anticipée n'est prévue. Pour les autres rapports, l'activation est autorisée dès l'instant ou le seuil d'activation *σ* est atteint.

Si à un instant donné pendant le fonctionnement du véhicule (rapports engagés 1, 2 ou 3), le régime de primaire *ω*ₚ descend en dessous du seuil *σ* alors établi en fonction d'un ou de plusieurs des paramètres mentionnés, le calculateur de bord déclenche l'activation d'une stratégie d'ouverture anticipée de l'embrayage (Bloc B3).

Pendant l'activation de cette stratégie d'ouverture anticipée, le fonctionnement du dispositif de commande est asservi à un ou plusieurs des paramètres suivants: le régime *ω*ₘ du moteur, le rapport engagé R de la boîte de vitesses et le régime *ω*ₚ de l'arbre primaire de celle-ci (bloc B4).

Pendant l'activation de la stratégie d'ouverture, deux voies de fonctionnement peuvent être prises par le dispositif de commande. Le processus de fonctionnement s'engage sur l'une de ces voies (celle de gauche sur la figure), si le régime de primaire *ω*ₚ passe de nouveau au-dessus du seuil *σ* en vigueur au moment considéré en fonction des paramètres d'entrée de la cartographie B2 (voir bloc B5 sur la figure). II est alors décidé, en fonction d'un ou de plusieurs paramètres parmi *ω*ₘ, R et naturellement *ω*ₚ si la stratégie d'ouverture anticipée doit être désactivée ou non (bloc B6). Après que la désactivation est enclenchée, le processus retourne en l'état initial et l'opération du bloc B1 est de nouveau exécutée.

Pendant que la stratégie d'ouverture anticipée est activée, l'autre alternative peut être la commande d'ouverture anticipée illustrée par le bloc B7. Le dispositif de commande envoie alors à l'actionneur de l'embrayage un signal de commande d'ouverture. Il en résulte une décroissance du régime de primaire *ω*ₚ (bloc B8). Le calculateur de bord du véhicule vérifie alors si le rapport engagé R de la boîte de vitesses est supérieure ou égal à 2 (bloc B9). Si ce n'est pas le cas, il est d'abord procédé au rétrogradation vers le rapport inférieur (bloc B10). Cette opération étant achevée, le processus retourne à l'opération B1, et de nouvelles boucles de commande sont exécutées, jusqu'à ce que la boîte de vitesse soit placée dans l'état du rapport de première. Dans ce cas, le processus retourne à l'opération B1 et si les conditions régissant l'entrée en stratégie d'ouverture anticipée persistent, il est procédé à cette ouverture anticipée pour éviter le calage du moteur du véhicule jusqu'à ce que celui-ci soit immobilisé.

## Revendications

1. Dispositif de commande d'un embrayage pour groupe motopropulseur de véhicule automobile comportant un moteur entraînant, par l'intermédiaire dudit embrayage, une boîte de vitesses de type automatique ou séquentiel, l'embrayage étant ouvert ou fermé à l'aide d'un actionneur commandé par le dispositif de commande, ce dernier étant agencé pour activer une stratégie d'ouverture anticipée de l'embrayage lorsque le régime de l'arbre primaire de ladite boîte de vitesses descend en dessous d'un seuil prédéterminé afin d'empêcher le calage dudit moteur pendant les phases de ralentissement jusqu'à l'arrêt dudit véhicule,
ce dispositif de commande étant **caractérisé en ce qu'**il est agencé pour activer ladite stratégie d'ouverture anticipée de l'embrayage également en fonction d'au moins l'un des paramètres suivants choisis parmi la température (Tₐ) dudit actionneur, la température (Tₑₘ) de l'eau de refroidissement dudit moteur et le rapport de vitesses (R) dans lequel est engagé ladite boîte.

2. Dispositif de commande selon la revendication 1, **caractérisé en ce que** le seuil d'activation (*σ*) de la stratégie d'ouverture anticipée de l'embrayage est fixé à une valeur du régime de primaire (*ω*ₚ) de la boîte de vitesses, inférieure à la valeur de seuil de passage de rapports de la boîte de vitesses, notamment lors des phases de freinage du véhicule.

3. Dispositif de commande selon l'une quelconque des revendications 1 et 2, **caractérisé en ce que** pendant l'activation de ladite stratégie d'ouverture anticipée, le fonctionnement du dispositif de commande est asservi à un ou plusieurs des paramètres suivants: le régime (*ω*ₘ) du moteur, le rapport engagé (R) de la boîte de vitesses et le régime (*ω*ₚ) de l'arbre primaire de celle-ci.
